# EUROPÄISCHE PATENTANMELDUNG

(11) **EP 0 696 745 A2**
(43) Veröffentlichungstag der Anmeldung: **14.02.1996**
(21) Anmeldenummer: 95112140.9
(22) Anmeldetag: 02.08.1995
(51) Int. Cl.: G01V 8/10

(54) **Infrarot-Bewegungsmelder**

(30) Priorität: 12.08.1994 DE 4428628
(71) Anmelder: Gebrüder Merten GmbH & Co. KG, D-51674 Wiehl (DE)
(72) Erfinder: Schlechtingen, Peter, Dipl.-Ing., D-51597 Lichtenberg (DE)
(74) Vertreter: Selting, Günther

(57) **Zusammenfassung**

Der Bewegungsmelder weist einen Linsenschirm (12) aus zahlreichen Linsen auf, die einfallende Strahlung im Wellenlängenbereich von 7 bis 14 µm auf einen Infrarotsensor konzentrieren. Mindestens einige der Linsen sind holographische Linsen (HL) auf einem ebenen Träger. Holographische Linsen haben im Infrarotbereich den Vorteil, geringerer Strahlungsverluste als **gewölbte** Linsen. Gegenüber Fresnel-Linsen sind sie einfacher herstellbar.

## Beschreibung

Die Erfindung betrifft einen Infrarot-Bewegungsmelder, zum Feststellen von sich bewegenden Menschen oder Tieren in einem Überwachungsbereich.

Bewegungsmelder haben einen Infrarotsensor, vor dem im Strahlenweg der einfallenden Strahlung ein Linsenschirm angeordnet ist. Der Linsenschirm enthält zahlreiche Linsen, die jeweils Strahlung, die aus einem individuellen Empfangsbereich einer Linse einfällt, auf den Infrarotsensor konzentrieren. Auf diese Weise kann ein großer dreidimensionaler Gesamt-Erfassungsbereich realisiert werden, wodurch verhindert wird, daß der Bewegungsmelder umgangen wird.

Üblicherweise besteht der Linsenschirm aus sphärischen optischen Linsen aus Kunststoff, vorzugsweise Polyethylen. Dabei sind jedoch der Größe der Linse Grenzen gesetzt. Mit zunehmendem Durchmesser der Linse wird auch die größte Linsendicke (im Mittelbereich) sehr groß, was zu einer erheblichen Dämpfung der Durchlässigkeit für Infrarotstrahlung in diesem Bereich führt. Polyethylen hat eine Durchlässigkeit für ferne Infrarotstrahlung (Wellenlänge 7 bis 14 µm) von 70 bis 80 %. Andere Materialien, wie Glas oder andere Kunststoffe haben eine erheblich geringere Durchlässigkeit und entsprechend große Strahlungsverluste.

Eine im wesentliche gleichmäßige Scheibendicke haben Fresnel-Linsen aus zahlreichen sägezahnförmigen Rippen. Solche Fresnel-Linsen verschmutzen jedoch, wenn sie an der Außenseite des Linsenschirms angeordnet sind. Wenn sie an der Innenseite des Linsenschirms angeordnet sind, ergeben sich erhebliche Probleme beim Formen und insbesondere beim Entformen, weil die Rippen dann im Innern des bogenförmigen Bereichs des Linsenschirms angeordnet sind.

Der Erfindung liegt die Aufgabe zugrunde, einen Infrarot-Bewegungsmelder zu schaffen, bei dem der Linsenschirm ebene Linsen enthält, die relativ einfach herzustellen sind und bei denen die oben geschilderten Probleme von gewölbten Linsen und Fresnel-Linsen vermieden werden.

Die Lösung dieser Aufgabe erfolgt erfindungsgemäß mit den im Patentanspruch 1 angegebenen Merkmalen.

Der erfindungsgemäße Infrarot-Bewegungsmelder weist mindestens einige Linsen auf, die als holographische Linsen ausgebildet sind. Holographische Linsen haben einen plattenförmigen Träger, der vorzugsweise eben ist, und auf dem sich ein Hologramm mit strahlungskonzentrierender, strahlungslenkender Wirkung befindet. Hologramme, die Linsenwirkung haben, sind für den optischen Bereich sichtbaren Lichts (200 bis 600 nm) bekannt. Bisher sind derartige Hologramme nur für den Bereich sichtbaren Lichts hergestellt worden. Überraschenderweise hat sich herausgestellt, daß die strahlungslenkende und strahlungskonzentrierende Wirkung entsprechender Hologramme auch im Bereich des fernen Infrarot erhalten werden kann.

Als Hologrammträger werden vorzugsweise formstabile Folien, ähnlich Filmfolien, benutzt, auf denen die Hologramme entweder durch entsprechende Belichtung einer lichtempfindlichen Schicht mittels kohärenter Infrarot-Laserstrahlung erzeugt werden, oder in einem Abdruckverfahren von einem Masterhologramm erzeugt werden. Die Hologrammträger bestehen vorzugsweise aus Polyethylen, das für Infrarotstrahlung eine hohe Durchlässigkeit hat.

Der Linsenschirm kann außer den holographischen Linsen noch Fresnel-Linsen oder gewölbte (dicke) Linsen enthalten. Solche gewölbten Linsen eignen sich insbesondere für den Nah-Erfassungsbereich des Linsenschirms. Wenn für den Fern-Bereich holographische Linsen und für den Nahbereich dicke Linsen verwendet werden, kompensiert die geringere Strahlungsdurchlässigkeit der dicken Linsen teilweise die aus dem Nahbereich kommende höhere Strahlungsintensität, so daß insgesamt die Strahlungsempfindlichkeit des Bewegungsmelder ausgeglichen wird. Andererseits ist es in bestimmten Fällen auch möglich, für den Nahbereich holographische Linsen zu verwenden und für den Fernbereich andere Linsen.

Die Hologramme können nach Art von Dia-Bildern in Fenstern eines starren Tragkörpers eingesetzt sein. Der Tragkörper bildet somit sein Skelett, in dem die holographischen Linsen sich in fester Position befinden, wobei ihre optischen Achsen auf den Infrarotsensor gerichtet sind.

Im folgenden werden unter Bezugnahme auf die Zeichnungen Ausführungsbeispiele der Erfindung näher erläutert.

Es zeigen:
- Fig. 1: einen schematischen Schnitt durch die Funktionsteile eines Infrarot-Bewegungsmelders,
- Fig. 2: eine Ausführungsform eines Linsenschirmes aus mehreren ebenen Segmenten,
- Fig. 3: eine Draufsicht des Linsenschirms von Fig. 2,
- Fig. 4: eine Seitenansicht eines Bewegungsmelders mit holographischen Linsen, und nicht-ebenen (dicken) Linsen,
- Fig. 5: eine Innenansicht eines weiteren Linsenschirms,
- Fig. 6: eine Ansicht des Linsenschirms von Fig. 6 von oben,
- Fig. 7: eine weitere Ausführungsform eines Linsenschirms, bei dem die Hologramme in den Fenstern eines Tragkörpers angebracht sind,
- Fig. 8: einen Linsenschirm mit zwei verschiedenen Arten von Linsen, und
- Fig. 9: einen weiteren Linsenschirm.

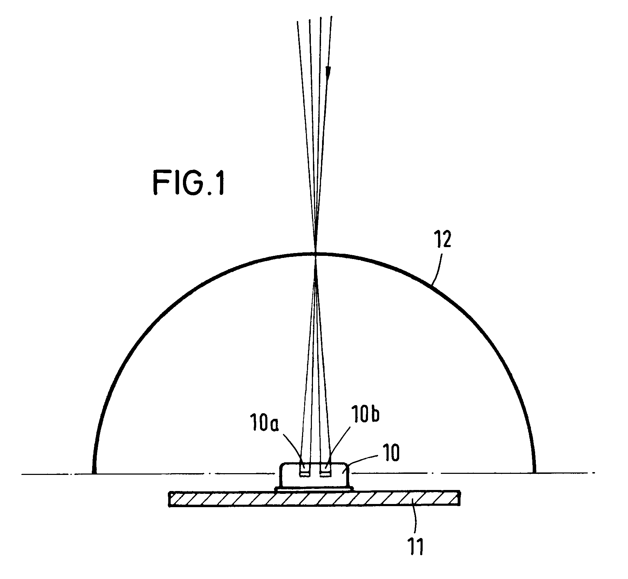

In Figur 1 ist das Funktionsschema eines Infrarot-Bewegungsmelders dargestellt. Der Bewegungsmelder weist einen Infrarotsensor 10 auf, der auf einer Platte 11 montiert ist und der von einem Linsenschirm 12 umgeben ist. Der Linsenschirm 12 besteht aus zahlreichen optischen Linsen, die jeweils Licht, das aus einem individuellen Empfangsbereich dieser Linse einfällt, auf den Infrarotsender 10 konzentrieren bzw. fokussieren.

Der Infrarotsensor 10 weist zwei antiparallel geschaltete Sensorelemente 10a, 10b auf, die in geringem Anstand voneinander angeordnet sind und die beide von der durch eine Linse einfallenden Strahlung getroffen werden können.

Die Linsen sind über den Linsenschirm 12 so verteilt, daß von allen Stellen des Linsenschirms Licht auf den Infrarotsensor gelenkt werden kann, wozu im Innern des Linsenschirms noch entsprechende Einbauten (Reflektoren) vorgesehen sein können.

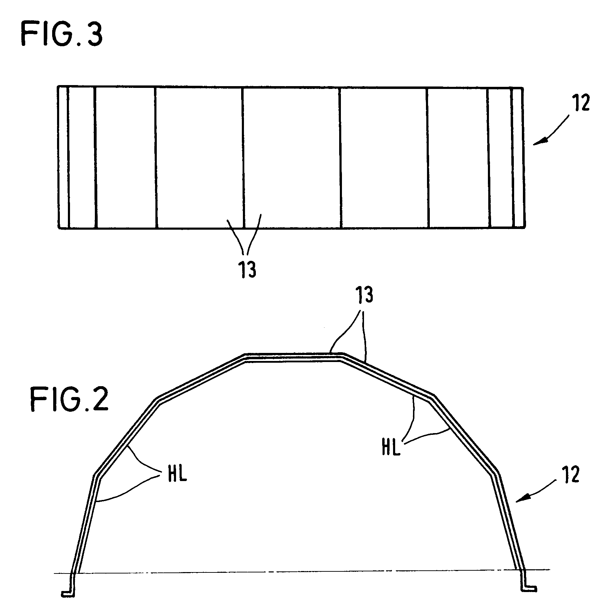

Bei dem Linsenschirm 12 der Figuren 2 und 3 handelt es sich um einen etwa halbkreisförmig gebogenen polygonalen Linsenschirm aus einzelnen ebenflächigen Segmenten 13, die jeweils entweder an ihrer Außenseite oder an ihrer Innenseite ein Hologramm in Form einer holographischen Linse HL tragen. Der Linsenschirm besteht aus einem formstabilen Film als Hologrammträger. Die holographischen Linsen HL können jeweils in einer Beschichtung des Hologrammträgers enthalten sein oder in der Oberfläche des flachen Hologrammträgers.

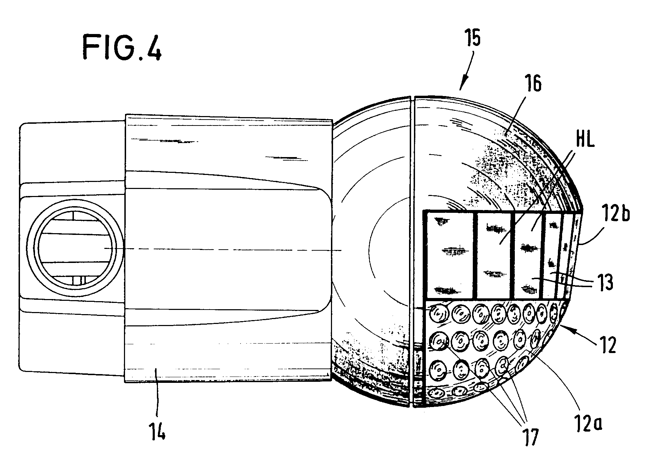

Der Bewegungsmelder 4 der Figuren 2 und 3 weist einen an einer Wand oder Decke zu befestigenden Halter 14 auf, an dem ein kugelförmiger Kopf 15 angebracht ist. Dieser Kopf 15 weist ein drehbares Kalottenteil 16 auf. Der Linsenschirm 12 bildet einen Teil, der Außenfläche des Kalottenteils 16. Der Linsenschirm 12 gemäß Fig. 4 besteht aus einem unteren Schirmteil 12a aus einer für Infrarotstrahlung durchlässigen Wand, in der zahlreiche sphärische Linsen 17 ausgeformt sind. Die Linsen 17 sind, entsprechend ihrer Lage in Bezug auf den Infrarotsensor, relativ zueinander unterschiedlich, wobei jede Linse auf den Infrarotsensor fokussiert ist. Der untere Schirmbereich 12a dient zur Erfassung des unterhalb des Bewegungsmelders befindlichen Bereich. Er bildet somit einen "Unterkriechschutz", der verhindert, das Personen unerkannt unter dem Bewegungsmelder hindurchkriechen. Für den Fernbereich ist der Schirmteil 12b vorgesehen, der etwa in Äquatorhöhe des Kopfes 15 angeordnet ist und ähnlich wie der Linsenschirm der Fign. 2 und 3 ausgebildet ist. Der Schirmteil 12b besteht aus einem für Infrarotstrahlung durchlässigen Material, das nach Art einer Polygonstruktur in mehrere ebene Segmente 13 unterteilt ist, die im wesentlichen rechteckig sind. Jedes Segment 13 trägt ein Hologramm mit den Eigenschaften einer holographischen Linse HL, die den individuellen Empfangsbereich der jeweiligen auf den Infrarotsensor im Innern des Kopfes 15 konzentriert.

Der Schirmteil 12b gemäß Fig. 4 dient der Erfassung des Fernbereichs. Die ebenflächigen holograpischen Linsen HL und ihr Trägermaterial haben eine hohe Strahlungsdurchlässigkeit für Infrarotstrahlung, so daß der Erfassungsbereich des Schirmteils 12 sehr lang ist. Demgegenüber sind die Strahlungsverluste des Schirmteils 12a wesentlich größer. Da dieser Schirmteil aber nur den Nahbereich erfassen muß (bis zum Erdboden), kann er aus nicht-ebenen Linsen bestehen. Der Schirmteil 12a hat hier die Form eines Kugelzweiecks oder "Apfelsinen-Segments".

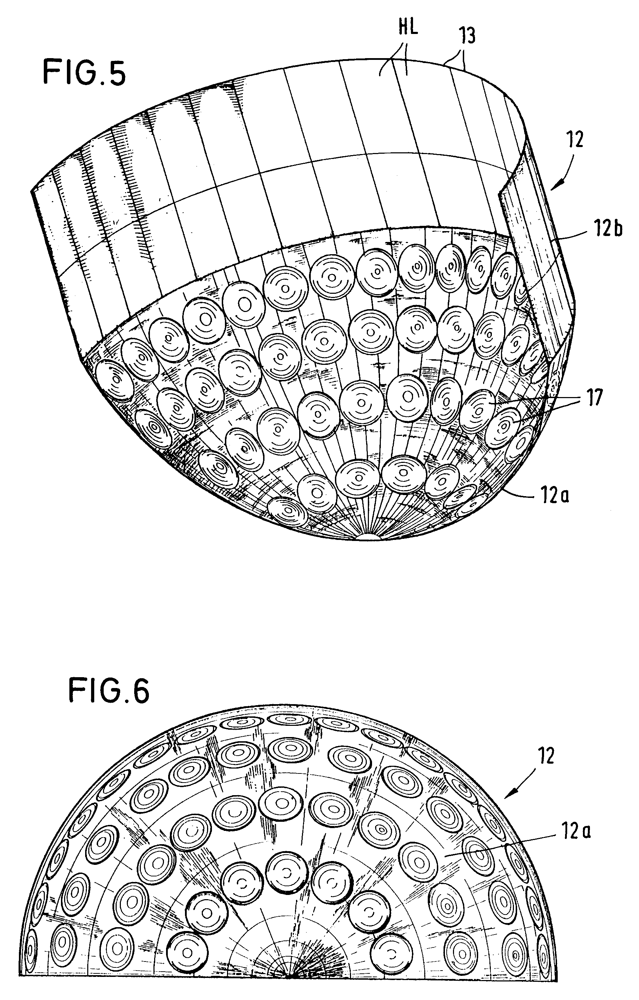

Die Fign. 5 und 6 zeigen einen Linsenschirm 12 mit einem unteren Schirmteil 12a, der viertelkugelförmig ist, d.h. aus der vorderen Hälfte einer unteren Halbkugel besteht, und zahlreiche nicht-ebene (gewölbte bzw. sphärische) Linsen 17 enthält, die in Kreisen auf Breitengraden um den unteren Pol der Halbkugel herum angeordnet sind. Vom Äquator der Halbkugel erstreckt sich ein halbzylindrischer Schirmteil 12b nach oben, der in mehrere Reihen von Segmenten 13 unterteilt ist, von denen jedes eine holographische Linse HL trägt. Auch hier dient der mit holographischen Linsen versehene Schirmteil 12b der Erfassung des fernen Bereichs und der untere Schirmteil 12a der Erfassung des Nahbereichs.

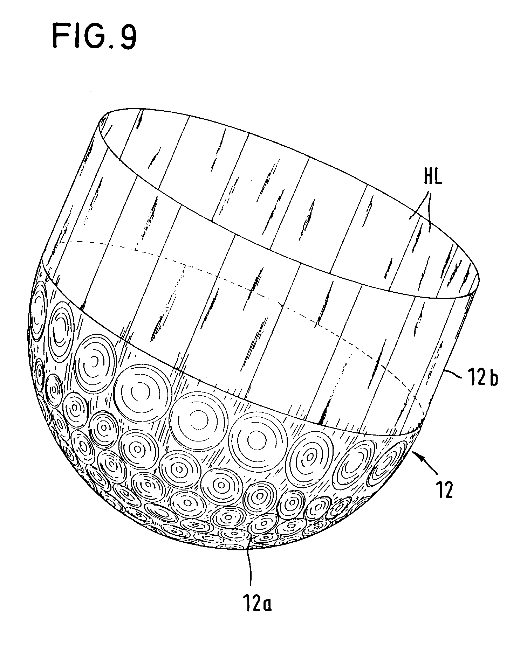

Der Linsenschirm gemäß Figur 5 und 6 stellt einen Sonderfall des Linsenschirms nach Figur 9 dar. Der Linsenschirm nach Figur 5 und 6 kann im unteren Teil eine viertelkugelförmige Oberfläche und im oberen Teil eine halbkreisförmige Oberfläche haben. Die Viertelkugeloberfläche des Linsenschirms kann durch weitere Verkleinerung die Form eines "Apfelsinen-Segmentes" erhalten. Man spricht dann von einem Kugelkeil oder Kugelzweieck.

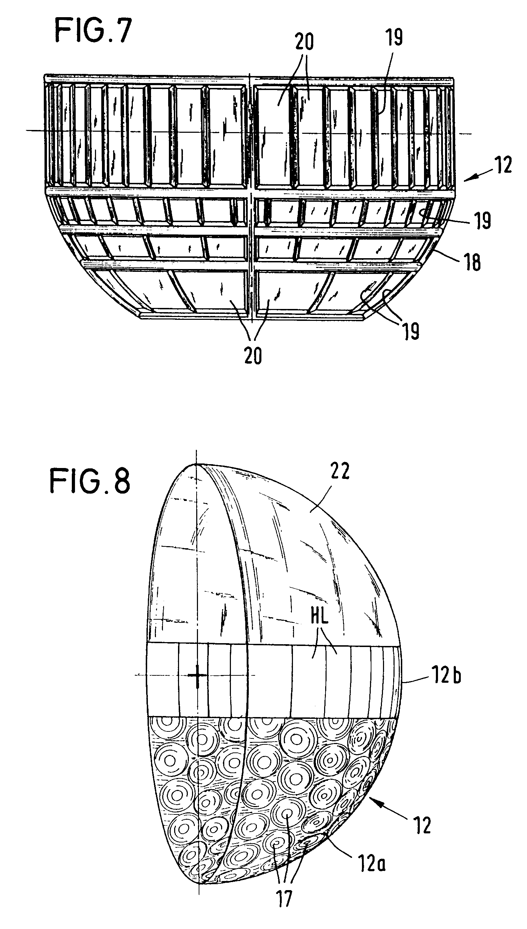

Bei dem Bewegungsmelder der Fig. 7 besteht der Linsenschirm 12 aus einem gitterartigen Tragkörper 18, der in zahlreiche Fenster 19 unterteilt ist, welche durch Streben oder Leisten begrenzt sind. In die Fenster 19 sind plattenförmige Hologrammträger 20 eingesetzt, die jeweils eine holographische Linsen HL tragen. Der Tragkörper 18 ist ein Polyedergitter, in das die Hologramme eingesetzt sind.

Der Linsenschirm 12 von Fig. 8 entspricht weitgehend dem Linsenschirm der Fig. 4, wobei ein unterer Schirmteil 12a mit gewölben Linsen 17 (oder Fresnel-Linsen) und darüber in Äquatorhöhe der Halbkugel ein Schirmteil 12b mit holographischen Linsen HL vorgesehen ist. Der obere Teil 22 der Halbkugel ist ohne Linsen. Er besteht aus strahlungsundurchlässigem (blindem) Material. Eine derartige Linse kann für einen Bewegungsmelder zur Wandmontage verwendet werden, mit dem ein Fernbereich (holographische Linsen) und ein Nahbereich oder Unterkriechbereich erfaßt werden.

Der Linsenschirm nach Fig. 9 stellt eine Rundum-Version (Verdoppelung) des Linsenschirmes von Figuren 5 und 6 dar. Er weist eine halbkugelförmige Kalotte als unteren Schirmteil 12a mit gewölbten Linsen auf, an dessen Äquator sich ein zylindrischer (polygonaler) Schirmteil 12b mit holographischen Linsen HL anschließt. Wie auch bei anderen Ausführungsbeispielen ist ein kugeliger, d.h. doppelt gekrümmter Teil vorgesehen, der die dreidimensionalen Linsen trägt, und ein zylindrischer, d.h. einfach gekrümmter Teil, der die holographischen Linsen trägt.

## Patentansprüche

1. Infrarot-Bewegungsmelder mit einem vor mindestens einem Infrarotsensor (10) montierten Linsenschirm (12) mit zahlreichen Linsen, die jeweils die aus einem individuellen Empfangsbereich einfallende Strahlung auf den Sensor (10) konzentrieren,
**dadurch gekennzeichnet,**
daß mindestens einige der Linsen holographische Linsen (HL) sind, die Strahlung im Bereich von 7 bis 14 µm auf den Sensor (10) konzentrieren.

2. Infrarot-Bewegungsmelder nach Anspruch 1, dadurch gekennzeichnet, daß die holographischen Linsen (HL) jeweils auf einem ebenen Träger (13) angeordnet sind.

3. Infrarot-Bewegungsmelder nach Anspruch 1 oder 2, dadurch gekennzeichnet, daß mindestens einige der nicht-holographischen Linsen Fresnel-Linsen oder gewölbte Linsen (17) sind.

4. Infrarot-Bewegungsmelder nach einem der Ansprüche 1 bis 3, dadurch gekennzeichnet, daß die Fresnel-Linsen oder gewölbten Linsen auf den Nahbereich gerichtet sind, während die holographischen Linsen (HL) auf den Fernbereich gerichtet sind.

5. Infrarot-Bewegungsmelder nach einem der Ansprüche 1 bis 4, dadurch gekennzeichnet, daß die Träger (13) der holographischen Linsen (HL) aus Polyethylen bestehen.

6. Infrarot-Bewegungsmelder nach einem der Ansprüche 1 bis 5, dadurch gekennzeichnet, daß die Hologramme in Fenstern (19) eines starren Tragkörpers (18) befestigt sind.

7. Infrarot-Bewegungsmelder nach einem der Ansprüche 1 bis 5, dadurch gekennzeichnet, daß der Linsenschirm (12) einen teilkugelförmigen Bereich aufweist, in dem gewölbte Linsen (17) angeordnet sind.

8. Infrarot-Bewegungsmelder nach Anspruch 7, dadurch gekennzeichnet, daß sich an den teilkugelförmigen Bereich mit gewölbten Linsen (17) ein zylindrischer oder teilzylindrischer Bereich mit holographischen Linsen (HL) anschließt.

9. Infrarot-Bewegungsmelder nach Anspruch 8, dadurch gekennzeichnet, daß der teilkugelige Bereich etwa die Form einer Viertelkugel hat und sich an diesen Bereich ein halbzylindrischer Bereich anschließt (Fign. 5 und 6).

10. Infrarot-Bewegungsmelder nach Anspruch 8, dadurch gekennzeichnet, daß der teilkugelige Bereich etwa die Form einer Halbkugel hat und sich an diesen Bereich ein zylindrischer Bereich anschließt (Figur 9).

11. Infrarot-Bewegungsmelder nach einem der Ansprüche 7 bis 10, dadurch gekennzeichnet, daß der untere Bereich des Linsenschirms teilkugelförmig ausgebildet ist und daß über dem Linsenschirm ein für Infrarotstrahlung undurchlässiges Oberteil (22) vorgesehen ist, das gemeinsam mit dem Linsenschirm eine den Infrarotsensor (10) bedeckende Haube bildet.
